# EUROPÄISCHE PATENTSCHRIFT

(11) **EP 3 546 045 B1**
(45) Veröffentlichungstag und Bekanntmachung des Hinweises auf die Patenterteilung: **18.08.2021**
(21) Anmeldenummer: 19164449.1
(22) Anmeldetag: 21.03.2019
(51) Int. Cl.: B01D 35/30, B01D 46/00, F02C 7/00

(54) **BELÜFTUNGSEINRICHTUNG ZUM FILTERN VON LUFT UND ZUM ABSCHEIDEN VON WASSERAEROSOLEN AUS LUFT**
VENTILATION DEVICE FOR FILTERING AIR AND FOR SEPARATING WATER AEROSOLS FROM AIR
DISPOSITIF D'AÉRATION PERMETTANT DE FILTRER L'AIR ET DE SÉPARER DES AÉROSOLS D'EAU À PARTIR DE L'AIR

(30) Priorität: 27.03.2018 DE 102018204634
(43) Veröffentlichungstag der Anmeldung: 02.10.2019
(73) Patentinhaber: Filtration Group GmbH, 74613 Öhringen (DE)
(72) Erfinder: GORZAWSKI, Steffen, 74906 Bad Rappenau (DE); KUGEL, Wolfgang, 74549 Wolpertshausen (DE); SZONTKOWSKI, Andreas, 74182 Obersulm (DE); RÖDIGER, Fritz, 74257 Untereisesheim (DE)
(74) Vertreter: BRP Renaud & Partner mbB Rechtsanwälte Patentanwälte Steuerberater

(56) Entgegenhaltungen:
- WO-A1-2015/018230
- DE-U1- 29 909 495
- DE-U1-202006 009 355
- US-A1- 2011 154 991
- US-A1- 2016 166 955

## Beschreibung

Die Erfindung betrifft eine Belüftungseinrichtung zum Filtern von Luft und zum Abscheiden von Wasseraerosolen aus Luft gemäß dem Oberbegriff des Anspruchs 1.

Belüftungseinrichtungen zum Filtern von Luft und zum Abscheiden von Wasseraerosolen aus Luft sind aus dem Stand der Technik bereits bekannt und werden beispielsweise in Windkraftanlagen eingesetzt. Je nach dem Standort der Windkraftanlage muss die von außen angesaugte Luft gereinigt und entwässert werden, um elektronische oder elektrische Bauteile innerhalb der Windkraftanlage zu schützen. Dazu saugen Gebläse die Luft in die Windkraftanlage durch Filterelemente an, in denen die angesaugte Luft gereinigt und entwässert wird. Je nach dem Aufbau der Windkraftanlage müssen auch die Belüftungseinrichtungen angepasst werden. Üblicherweise ist das mit hohen Kosten und mit einem hohen Aufwand verbunden. US2011/154991A1 offenbart eine Belüftungseinrichtung welche eine Filterelementvielzahl und einen Strömungsadapter aufweist.

Die Aufgabe der Erfindung ist es daher, für eine Belüftungseinrichtung der gattungsgemäßen Art eine verbesserte oder zumindest alternative Ausführungsform anzugeben, bei der die beschriebenen Nachteile überwunden werden.

Diese Aufgabe wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Belüftungseinrichtung zum Filtern von Luft und zum Abscheiden von Wasseraerosolen aus Luft modular aufzubauen. Die gattungsgemäße Belüftungseinrichtung weist dabei mehrere Filterelemente, mehrere Gehaüse, mehrere Gebläse und wenigstens einen Strömungsadapter auf. In dem wenigstens einen Gehäuse ist das wenigstens eine Filterelement von einer Einlassöffnung zu einer Auslassöffnung des wenigstens einen Gehäuses in eine Strömungsrichtung luftdurchströmbar festgelegt. Das wenigstens eine Gebläse ist an der Auslassöffnung in Strömungsrichtung hinter dem wenigstens einen Gehäuse und der wenigstens eine Strömungsadapter ist an der Einlassöffnung in Strömungsrichtung vor dem wenigstens einen Gehäuse festgelegt. Erfindungsgemäß bilden das Filterelement, das Gehäuse und das Gebläse jeweils ein Belüftungsmodul mit einer Strömungsfläche. Ferner sind mehrere identische Belüftungsmodule zu der Belüftungseinrichtung aneinander derart lösbar gestapelt, dass eine Gesamtströmungsfläche der Belüftungseinrichtung einem Vielfachen der Strömungsfläche des einzelnen Belüftungsmoduls entspricht. Vorteilhafterweise ist dadurch die Belüftungseinrichtung modular aufbaubar und je nach den Anforderungen mit weiteren Belüftungsmodulen erweiterbar. Ferner sind die einzelnen identisch ausgestalteten Belüftungsmodule gegeneinander austauschbar, so dass die Montage und die Wartung der Belüftungseinrichtung vereinfacht sind.

In der Belüftungseinrichtung sind der wenigstens eine Strömungsadapter, das jeweilige Gehäuse mit dem jeweiligen Filterelement und das jeweilige Gebläse in Strömungsrichtung nacheinander angeschlossen, so dass die Luft durch den wenigstens einen Strömungsadapter zu der Einlassöffnung des jeweiligen Gehäuses und weiter durch das jeweilige Filterelement strömen kann. Durch das Gebläse ist dabei die Luft von außen ansaugbar und durch den wenigstens einen Strömungsadapter weiter in das jeweilige Gehäuse mit dem jeweiligen Filterelement leitbar. Das Gehäuse kann vorteilhafterweise aus Kunststoff hergestellt - beispielweise rotationsgeformt - sein. Der Strömungsadapter kann vorteilhafterweise strömungsoptimiert sein und die Geometrie des Strömungsadapters kann an den jeweiligen Anwendungsfall angepasst sein. Das jeweilige Filterelement weist zweckgemäß eine Rein- und eine Rohseite auf und ist aus einem Filtermaterial geformt. Das Filtermaterial kann dabei beispielsweise hydrophob sein und das in der angesaugten Luft befindliche Wasser in einer Filtrierzone abscheiden. Das in dem Filterelement abgeschiedene Wasser kann sich dann auf der Rohseite des Filterelements unter der Einwirkung der Schwerkraft in eine Drainagezone des Filterelements absetzen. Die Drainagezone schließt an die Filtrierzone des Filterelements an und ist zweckgemäß quer zur Strömungsrichtung versetzt unterhalb der Filtrierzone des Filterelements angeordnet. Die Filtrierzone des Filterelements korrespondiert dabei mit einem Filtrierbereich und die Drainagezone mit einem Abtropfbereich des Gehäuses. Der Filtrierbereich und der Abtropfbereich des Gehäuses schließen dabei einander an.

Vorteilhafterweise kann vorgesehen sein, dass wenigstens zwei der in der Belüftungseinrichtung benachbarten Belüftungsmodule an seinen Gehäusen jeweils eine sich in Strömungsrichtung erstreckende Kabelteilvertiefung aufweisen. Dabei liegen die jeweiligen Kabelteilvertiefungen an den Gehäusen der benachbarten Belüftungsmodule in Strömungsrichtung aneinander an und bilden eine Kabelöffnung. Die Kabelteilvertiefungen können identisch ausgestaltet sein, so dass eine Querschnittsfläche der Kabelöffnung einer doppelten Querschnittsfläche der einzelnen Kabelteilvertiefung entspricht. Durch die Kabelöffnung können die Kabelleitungen in Strömungsrichtung zwischen den jeweiligen Belüftungsmodulen geführt werden, so dass ohne einen zusätzlichen Platzbedarf elektrische Bestandteile der Belüftungseinrichtung in Strömungsrichtung vor und nach dem jeweiligen Belüftungsmodul miteinander elektrisch verbunden werden können.

Um die einzelnen Belüftungsmodule aneinander lösbar stapeln zu können, kann eins der in der Belüftungseinrichtung benachbarten Belüftungsmodule an seinem Gehäuse vorteilhafterweise wenigstens eine sich in Strömungsrichtung erstreckende Ausnehmung und ein anderes der in der Belüftungseinrichtung benachbarten Belüftungsmodule an seinem Gehäuse wenigstens eine sich in Strömungsrichtung erstreckende Ausformung aufweisen. Die wenigstens eine Ausnehmung und die wenigstens eine Ausformung stehen dabei quer zur Strömungsrichtung im Eingriff und bilden eine sogenannte Nut-Feder-Verbindung. Die wenigstens eine Ausnehmung und die wenigstens eine Ausformung legen auf diese Weise die benachbarten Belüftungsmodule aneinander lösbar fest. Um die jeweiligen Belüftungsmodule identisch auszubilden, können an dem jeweiligen Gehäuse jeweils die wenigstens eine Ausnehmung und die wenigstens eine Ausformung ausgebildet sein. Zweckgemäß sind diese an gegenüberliegenden Gehäuseseiten ausgebildet, so dass die übereinander oder nebeneinander gestapelten Belüftungsmodule lösbar einander festlegbar sind.

Bei einer bevorzugten Ausgestaltung der Belüftungseinrichtung ist vorgesehen, dass die Belüftungseinrichtung vier Belüftungsmodule und einen Strömungsadapter aufweist. Die Belüftungsmodule sind dabei zu einem 2x2 Stapelblock aneinander lösbar festgelegt und mittels eines Kopplungsrahmens an dem Strömungsadapter luftleitend festgelegt. Die jeweiligen Belüftungsmodule sind identisch ausgestaltet und weisen jeweils ein quaderförmiges Gehäuse mit einem quaderförmigen Filterelement und ein Gebläse auf. Der Strömungsadapter ist an den jeweiligen Belüftungsmodulen durch den Kopplungsrahmen festgelegt.

Ein Kopplungsrahmen aufweist die jeweiligen Belüftungsmodule quer zur Strömungsrichtung einfassenden Modultragrahmen und einen den wenigstens einen Strömungsadapter tragenden Adaptertragrahmen. Der Modultragrahmen und der Adaptertragrahmen können durch eine Scharniervorrichtung aneinander klappbar oder verschiebbar gelagert und durch eine Verschlusseinheit aneinander festlegbar sein. Bei dieser vorteilhaften Ausgestaltung der Belüftungseinrichtung kann der Kopplungsrahmen geöffnet und beispielweise das Filterelement in dem jeweiligen Belüftungsmodul vereinfacht ausgewechselt werden. Eine Ablaufkanalanordnung zum Ablaufen des in dem jeweiligen Filterelement abgeschiedenen Wassers kann dann beispielsweise in dem Adaptertragrahmen ausgebildet sein. An dem Kopplungsrahmen kann vorteilhafterweise eine Durchlassanordnung für die Einlassöffnung des jeweiligen Gehäuses quer zur Strömungsrichtung festgelegt sein. Die Durchlassanordnung - bevorzugt eine Jalousienanordnung - ist dabei zum Steuern des Luftvolumenstroms durch das jeweilige Belüftungsmodul vorgesehen.

Bei einer Weiterbildung der erfindungsgemäßen Belüftungseinrichtung ist vorteilhafterweise vorgesehen, dass das jeweilige Filterelement einen umlaufenden Dichtrand aufweist. Dabei liegt der Dichtrand einseitig an einer die Einlassöffnung einfassenden Dichtfläche des Gehäuses und andersseitig an dem Kopplungsrahmen an und dichtet das jeweilige Gehäuse um die Einlassöffnung zu dem Kopplungsrahmen quer zur Strömungsrichtung ab. Der Dichtrand dichtet einen Druckraum der Belüftungseinrichtung ab und ist an dem Filterelement ausgebildet, so dass beim Einsetzen oder beim Auswechseln des jeweiligen Filterelements in der Belüftungseinrichtung auch der Dichtrand eingesetzt oder ausgewechselt werden kann. Insbesondere kann das Abdichten des Druckraumes der Belüftungseinrichtung durch den Dichtrand werkzeugfrei vorgenommen werden und dadurch der Zeit- und Kraftaufwand beim ersten und beim erneuten Abdichten der Belüftungseinrichtung reduziert werden. Die Dichtfläche an dem jeweiligen Gehäuse kann dabei durch einen die Einlassöffnung einfassenden Gehäuserahmen gebildet sein, der eine radial nach innen vorstehende Einlassstufe in dem jeweiligen Gehäuse bildet. Auf diese vorteilhafte Weise kann die Luftströmung ohne Verluste zu dem Filterelement in dem jeweiligen Gehäuse geleitet werden. Zum Abdichten kann an einer dem Gehäuse und/oder dem Kopplungsrahmen zugewandten Seitenfläche des Dichtrands eine elastische Dichtung festgelegt sein. Die elastische Dichtung kann dabei an den Seitenflächen des Dichtungsrands stoffschlüssig - beispielsweise angeklebt - oder jedoch kraftschlüssig - beispielsweise in einer Profilnut eingerastet - festgelegt sein.

Bei einer vorteilhaften Weiterbildung der erfindungsgemäßen Belüftungseinrichtung ist vorgesehen, dass der wenigstens eine Strömungsadapter einteilig und bevorzugt aus Kunststoff ist. Der wenigstens eine Strömungsadapter ist folglich robust ausgeformt, so dass die durch das wenigstens eine Gebläse von außen angesaugte Luft bereits in dem wenigstens einen Strömungsadapter verteilt und über das jeweilige Filterelement gleichmäßig strömen kann. Insbesondere kann dadurch das jeweilige Filterelement geschont und länger verwendet werden. Ferner vergrößert der wenigstens eine Strömungsadapter aus Kunststoff das Eigengewicht der Belüftungsanlage nur wenig. Der wenigstens eine Strömungsadapter kann dabei einen Sammelbereich und einen Strömungsbereich aufweisen, die aneinander anschließen. Der Strömungsbereich des Strömungsadapters korrespondiert dabei luftleitend mit der Einlassöffnung des jeweiligen Gehäuses und der Sammelbereich ist quer zur Strömungsrichtung versetzt unterhalb des Strömungsbereichs angeordnet. Ferner liegt der Sammelbereich außerhalb einer Hauptluftströmung in dem wenigstens einen Strömungsadapter.

Vorteilhafterweise kann vorgesehen sein, dass eine Ablaufkanalanordnung den Sammelbereich des wenigstens einen Strömungsadapters und einen Abtropfbereich des jeweiligen Gehäuses fluidisch miteinander verbindet. Durch die Ablaufkanalanordnung kann das in dem Filterelement abgeschiedene Wasser aus dem jeweiligen Gehäuse in den Sammelbereich des wenigstens einen Strömungsadapters entgegen der Strömungsrichtung geführt werden. Der Sammelbereich des Strömungsadapters liegt dabei außerhalb der Hauptluftströmung in dem wenigstens einen Strömungsadapter, so dass dem in dem Filterelement abgeschiedenen Wasser beim Strömen in dem Sammelbereich des wenigstens einen Strömungsadapters kein Strömungswiderstand entgegenwirkt. Zum Ableiten des in dem Filterelement abgeschiedenen Wassers aus dem Sammelbereich kann der wenigstens eine Strömungsadapter eine aus dem Sammelbereich nach außen führende Adapterauslassöffnung aufweisen, die fluidisch mit der Ablaufkanalanordnung verbunden ist. Das in dem jeweiligen Filterelement abgeschiedene Wasser kann folglich ohne einen oder mit einem geringen Strömungswiderstand unter Einwirkung der Schwerkraft aus dem jeweiligen Gehäuse in den Sammelbereich des wenigstens einen Strömungsadapters entgegen der Strömungsrichtung geführt werden. Innerhalb des Strömungsadapters kann dann das in dem Filterelement abgeschiedene Wasser ohne einen oder mit einem geringen Strömungswiderstand unter Einwirkung der Schwerkraft zu der Adapterauslassöffnung und weiter nach außen geleitet werden. Auf diese vorteilhafte Weise kann ein Abführen des in dem Filterelement abgeschiedenen Wassers in jedem Betriebspunkt der Belüftungseinrichtung ohne eine zusätzliche Krafteinwirkung sichergestellt werden. Insbesondere können dadurch zusätzliche Leitungen und Pumpen zum Ableiten des in dem Filterelement abgeschiedenen Wassers entfallen.

Bei einer Weiterbildung der erfindungsgemäßen Belüftungseinrichtung ist vorteilhafterweise vorgesehen, dass die Ablaufkanalanordnung in einem Kopplungsrahmen ausgebildet ist, der zwischen dem jeweiligen Gehäuse und dem wenigstens einen Strömungsadapter quer zur Strömungsrichtung luftdicht festgelegt ist. Der Kopplungsrahmen verbindet somit das jeweilige Gehäuse mit dem wenigstens einen Strömungsadapter in Strömungsrichtung luftleitend und quer zur Strömungsrichtung luftdicht. Dadurch kann insbesondere der Druckraum der Belüftungseinrichtung abgedichtet und aufrechterhalten sein. Der Kopplungsrahmen kann ferner eine tragende Funktion übernehmen und die Belüftungseinrichtung gegen eine Verformung stabilisieren. Die Ablaufkanalanordnung ist in dem Kopplungsrahmen ausgebildet, so dass das in dem Filterelement abgeschiedene Wasser aus dem Abtropfbereich des jeweiligen Gehäuses über den Kopplungsrahmen in den Sammelbereich des wenigstens einen Strömungsadapters geleitet werden kann. Anschließend kann das in dem Filterelement abgeschiedene Wasser aus dem Sammelbereich des wenigstens einen Strömungsadapters nach außen durch die Adapterauslassöffnung geleitet werden. Die Ablaufkanalanordnung kann dabei die Abtropfbereiche der mehreren Gehäuse mit dem Sammelbereich des einen Strömungsadapter oder jedoch die Abtropfbereiche der mehreren Gehäuse mit den Sammelbereichen der mehreren Strömungsadapter fluidisch verbinden.

Vorteilhafterweise kann die Ablaufkanalanordnung wenigstens einen horizontalen Rinnenkanal aufweisen, der mit einem Abtropfbereich wenigstens eines der Gehäuse fluidisch verbunden ist. Der Rinnenkanal ist in dem Betriebszustand horizontal mit einer Abweichung bis zu 10° zum Boden ausgerichtet, um das in dem Filterelement abgeschiedene Wasser horizontal in der Belüftungseinrichtung unter der Einwirkung der Schwerkraft leiten zu können. Dabei kann der einzelne Rinnenkanal die Abtropfbereiche der mehreren nebeneinander angeordneten Gehäusen mit den entsprechenden Filterelementen fluidisch verbinden. Vorteilhafterweise kann die Ablaufkanalanordnung wenigstens zwei übereinander angeordnete Rinnenkanäle aufweisen, die durch wenigstens einen vertikalen Ablaufkanal fluidisch miteinander verbunden sind. Die übereinander angeordneten Rinnenkanäle verbinden dabei die Abtropfbereiche der jeweiligen Gehäuse in jeweils einer horizontalen Reihe und der wenigstens eine vertikale Ablaufkanal verbindet die Rinnenkanäle vertikal fluidisch miteinander. Der vertikale Ablaufkanal ist in dem Betriebszustand der Belüftungseinrichtung vertikal mit einer Abweichung bis zu 10° zum Boden ausgerichtet, so dass das in dem Filterelement abgeschiedene Wasser unter der Einwirkung der Schwerkraft aus einem zum Boden oberen Rinnenkanal in den zum Boden unteren Rinnenkanal geleitet werden kann. Vorteilhafterweise kann in der Ablaufkanalanordnung auf diese Weise ein Abführen des in dem Filterelement abgeschiedenen Wassers in jedem Betriebspunkt der Belüftungseinrichtung ohne eine zusätzliche Krafteinwirkung ausschließlich unter der Einwirkung der Schwerkraft sichergestellt werden. Das in den Filterelementen abgeschiedene Wasser kann anschließend aus der Ablaufkanalanordnung in den Sammelbereich des wenigstens einen Strömungsadapters und weiter nach außen geleitet werden. Zweckgemäß kann dazu der zum Boden unterste Rinnenkanal an seiner tiefsten Stelle durch eine Ablauföffnung mit dem Sammelbereich des wenigstens einen Strömungsadapters - beispielsweise über eine Ablaufleitung - fluidisch verbunden sein. Auf diese vorteilhafte Weise sind die mehreren Gehäuse und die mehreren Filterelemente über die Ablaufkanalanordnung in dem Kopplungsrahmen miteinander fluidisch verbunden und das in den mehreren Filterelementen abgeschiedene Wasser kann vereinfacht aus der Belüftungseinrichtung abgeleitet werden. Bevorzugt sind der wenigstens eine Rinnenkanal aus einem U-förmigen metallischen Profil und der wenigstens eine Ablaufkanal aus einem U-förmigen oder L-förmigen metallischen Profil gebildet.

Bei einer vorteilhaften Weiterbildung der erfindungsgemäßen Belüftungseinrichtung ist vorgesehen, dass das jeweilige Gebläse durch eine Steuerungsvorrichtung gesteuert ist. Die Steuerungsvorrichtung weist wenigstens eine Messanordnung zum Erfassen des Luftvolumenstroms durch das jeweilige Filterelement auf. Die wenigstens eine Messanordnung weist dabei eine Druckmesseinheit zum Erfassen eines statischen Drucks auf, die innerhalb der Belüftungseinrichtung angeordnet ist. Durch die Druckmesseinheit kann der statische Druck in dem jeweiligen Filterelement erfasst und daraus der Luftvolumenstrom durch das jeweilige Filterelement bestimmt werden. Insbesondere entfällt eine direkte und ungenaue Messung des Luftvolumenstroms in dem jeweiligen Filtergehäuse und die Belüftungseinrichtung kann genauer angesteuert werden.

Vorteilhafterweise kann die jeweilige Druckmesseinheit mit einer Druckmessstelle fluidisch verbunden sein oder eine solche Druckmessstelle aufweisen. Die Druckmessstelle ist dabei innerhalb des jeweiligen Gehäuses im Bereich der Einlassöffnung angeordnet und weist dort eine Messöffnung auf. Die Messöffnung kann dabei das jeweilige Gehäuse durchdringen, so dass die außerhalb des Gehäuses angeordnete Druckmesseinheit den statischen Druck innerhalb des Gehäuses und des Filterelements erfassen kann. Die jeweilige Druckmessstelle oder deren Messöffnung können vorteilhafterweise in einem Abtropfbereich des Gehäuses angeordnet sein. Der Abtropfbereich des Gehäuses korrespondiert dabei mit einer Drainagezone des Filterelements, die zum Abführen des in dem Filterelement abgeschiedenen Wassers vorgesehen ist. Die Drainagezone des Filterelements ist dabei an eine Filtrierzone des Filterelements angeschlossen und ist quer zur Strömungsrichtung unterhalb der Filtrierzone des Filterelements angeordnet. Um die Druckmesseinheit oder deren Druckmessstelle vor Wasser und Schmutz zu schützen, kann die Druckmessstelle auf einer Reinseite des Filterelements in dem jeweiligen Gehäuse angeordnet sein. Vorteilhafterweise kann die jeweilige Druckmessstelle oder deren Messöffnung in einer strömungsberuhigten Zone des Abtropfbereichs des Gehäuses in dieses integriert beziehungsweise in diesem festgelegt sein. Dabei kann die strömungsberuhigte Zone des Abtropfbereichs des Gehäuses mit einer strömungsberuhigten Zone der Drainagezone des Filterelements korrespondieren. "Strömungsberuhigt" bedeutet in diesem Zusammenhang, dass die an der Druckmessstelle oder deren Messöffnung vorliegende Luftströmung für eine Messung des statischen Drucks vernachlässigbar gering ist beziehungsweise in der Messung des statischen Drucks einen Messfehler unter 5% verursacht.

Vorteilhafterweise kann das Gehäuse einen die Einlassöffnung einfassenden Gehäuserahmen mit einer radial nach innen vorstehenden Einlassstufe aufweisen. Um die Messgenauigkeit beim Erfassen des statischen Drucks in dem jeweiligen durchströmten Gehäuse zu erhöhen, kann die Druckmessstelle an der Einlassstufe angeordnet sein. Die Messöffnung kann dabei in Strömungsrichtung offen und im Wesentlichen parallel - in diesem Zusammenhang mit einer Abweichung bis zu 30° - zur Strömungsrichtung ausgerichtet sein. Zweckgemäß ist die Messöffnung derart in dem jeweiligen Gehäuse angeordnet, dass keine oder nur vernachlässigbar kleine Luftströmung an der Druckmessstelle beziehungsweise an der Messöffnung vorliegt. Insbesondere kann dadurch der gemessene statische Druck unabhängig von dem in dem jeweiligen Gehäuse herrschenden Staudruck erfasst werden.

Zusammenfassend ist die erfindungsgemäße Belüftungseinrichtung modular aufbaubar und die identisch ausgestalteten Belüftungsmodule können auf einfache Weise gegeneinander ausgetauscht werden. Vorteilhafte weitere Ausgestaltungen der Belüftungseinrichtung ermöglichen ferner das in dem jeweiligen Filterelement abgeschiedene Wasser vereinfacht aus der Belüftungseinrichtung abzuleiten; ein Abdichten der Belüftungseinrichtung zu vereinfachen; die Belüftungseinrichtung genauer anzusteuern und die Luftströmung in dem jeweiligen Filterelement besser zu verteilen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Ansicht einer erfindungsgemäßen Belüftungseinrichtung;
- Fig. 2: eine Ansicht der in Fig. 1 gezeigten Belüftungseinrichtung von vorne;
- Fig. 3: eine Ansicht der in Fig. 1 gezeigten Belüftungseinrichtung von hinten;
- Fig. 4: eine seitliche Ansicht der in Fig. 1 gezeigten Belüftungseinrichtung;
- Fig. 5: eine Ansicht der in Fig. 1 gezeigten Belüftungseinrichtung von oben;
- Fig. 6: eine Schnittansicht der in Fig. 1 gezeigten Belüftungseinrichtung;
- Fig. 7: eine Seitenansicht eines Belüftungsmodus der in Fig. 1 gezeigten Belüftungseinrichtung;
- Fig. 8: eine Ansicht des Belüftungsmodus der in Fig. 1 gezeigten Belüftungseinrichtung von oben;
- Fig. 9: eine Schnittansicht des Belüftungsmodus der in Fig. 1 gezeigten Belüftungseinrichtung;
- Fig. 10: eine Ansicht eines Strömungsadapters der in Fig. 1 gezeigten Belüftungseinrichtung;
- Fig. 11: eine teilweise Schnittansicht des Strömungsadapters der in Fig. 1 gezeigten Belüftungseinrichtung;
- Fig. 12: eine Ansicht des Strömungsadapters der in Fig. 1 gezeigten Belüftungseinrichtung von hinten;
- Fig. 13: eine Ansicht des Strömungsadapters der in Fig. 1 gezeigten Belüftungseinrichtung von oben;
- Fig. 14: eine Schnittansicht der in Fig. 1 gezeigten Belüftungseinrichtung;
- Fig. 15: eine weitere Schnittansicht der in Fig. 1 gezeigten Belüftungseinrichtung.

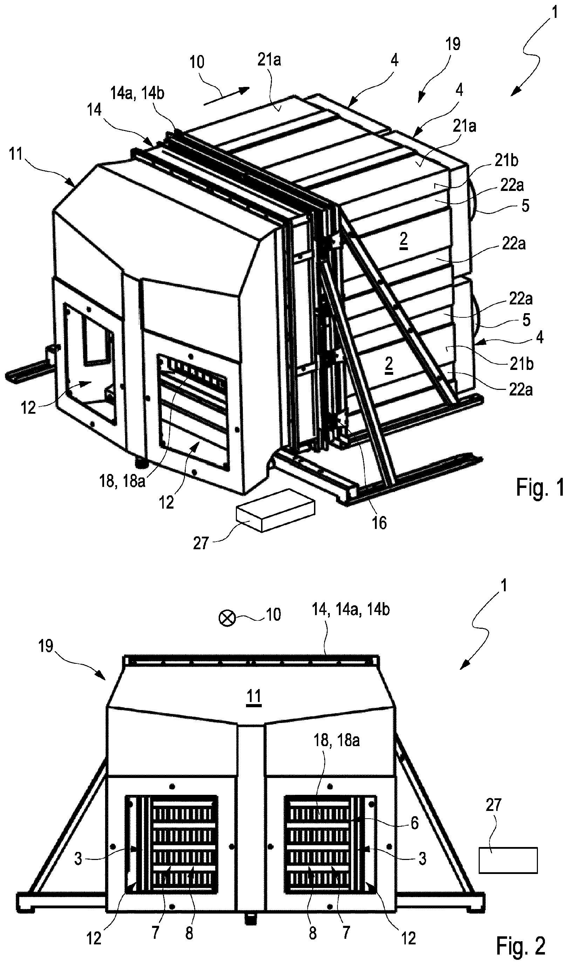

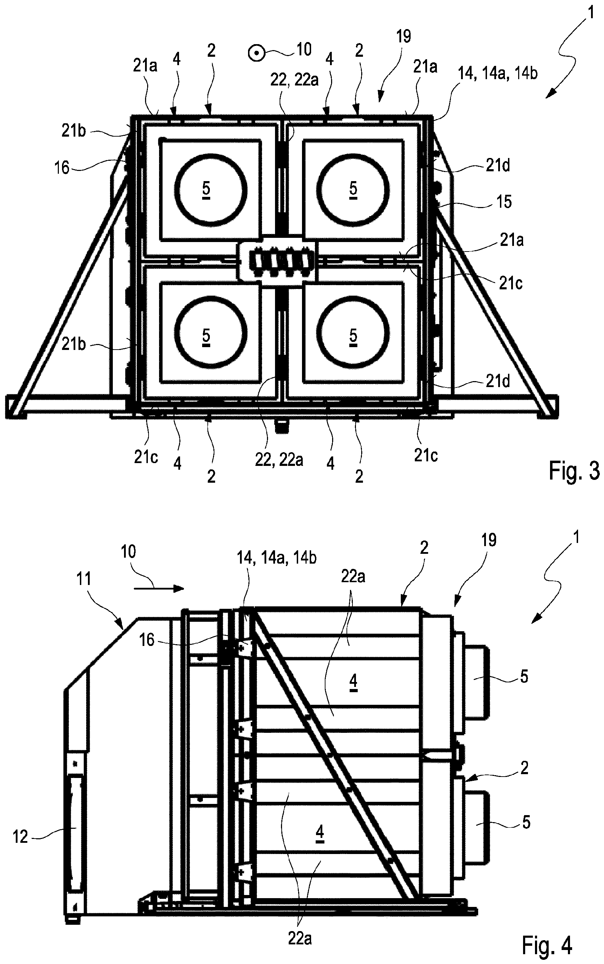

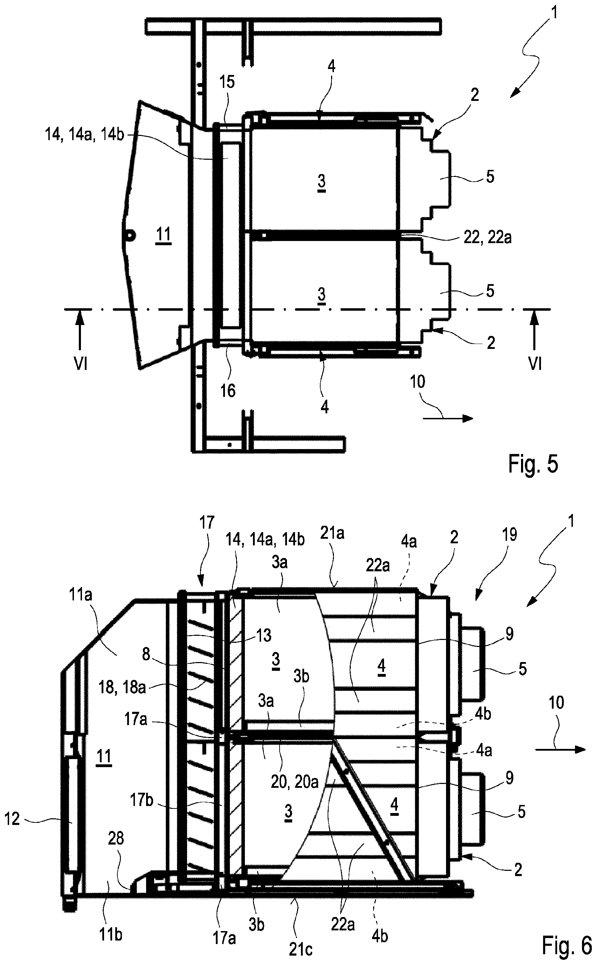

Fig. 1 zeigt eine Ansicht einer erfindungsgemäßen Belüftungseinrichtung 1 zum Filtern von Luft und zum Abscheiden von Wasseraerosolen aus Luft. Die Belüftungseinrichtung 1 ist in Fig. 2 von vorne; in Fig. 3 von hinten; in Fig. 4 von der Seite; in Fig. 5 von oben und in Fig. 6 im Schnitt gezeigt. Die Begriffe "vorne" und "hinten" beziehen sich hier und im Folgenden auf die die Belüftungseinrichtung 1 durchströmende Luft, die die eigebaute Belüftungseinrichtung 1 im Betriebszustand von "vorne" nach "hinten" parallel oder nahezu parallel zum Boden durchströmt. Die Begriffe "oben" und "unten" beziehen sich entsprechend auf die Ausrichtung der eingebauten Belüftungsvorrichtung 1 zum Boden. Die Belüftungseinrichtung 1 weist insgesamt vier Belüftungsmodule 2 auf, wobei das jeweilige Belüftungsmodul 2 ein Filterelement 3, ein Gehäuse 4 und ein Gebläse 5 aufweist.

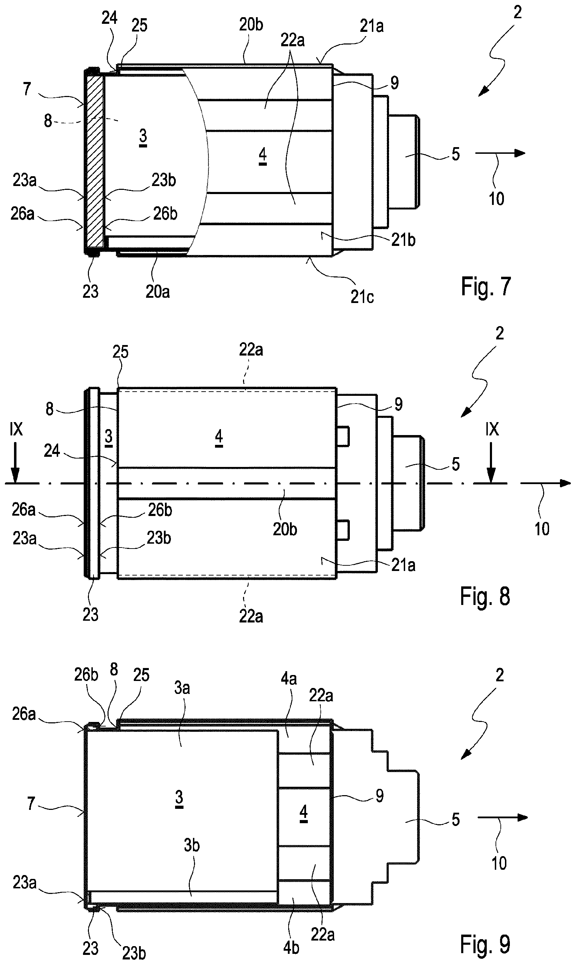

Die Belüftungsmodule 2 sind identisch und aneinander zu einem Stapelblock 19 lösbar gestapelt, so dass eine Gesamtströmungsfläche 6 der Belüftungseinrichtung 1 einem Vielfachen der Strömungsfläche 7 des einzelnen Belüftungsmoduls 2 entspricht. In dem jeweiligen Belüftungsmodul 2 ist das Filterelement 3 in dem jeweiligen Gehäuse 4 angeordnet und von einer Einlassöffnung 8 zu einer Auslassöffnung 9 des Gehäuses 4 in eine Strömungsrichtung 10 luftdurchströmbar. Das jeweilige Gebläse 5 ist an der Auslassöffnung 9 in Strömungsrichtung 10 hinter dem jeweiligen Gehäuse 4 festgelegt. Das jeweilige Gebläse 5 ist durch eine Steuerungsvorrichtung 27 gesteuert, die eine Messanordnung zum Erfassen des Luftvolumenstroms durch das jeweilige Filterelement 3 aufweist. In Fig. 7 bis Fig. 9 ist der Aufbau des Belüftungsmoduls 2 im Einzelnen gezeigt.

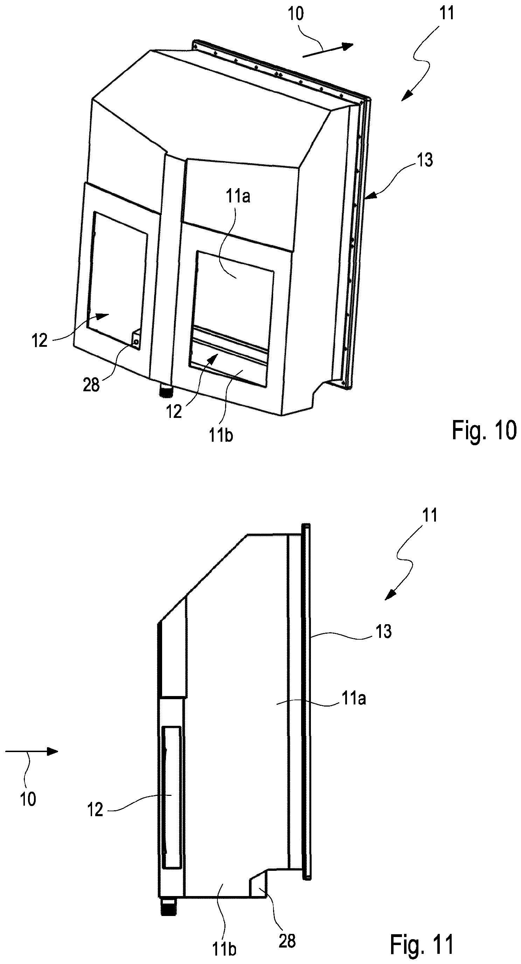

Ferner weist die Belüftungseinrichtung 1 einen Strömungsadapter 11 auf, der an der jeweiligen Einlassöffnung 8 in Strömungsrichtung 10 vor dem jeweiligen Gehäuse 4 festgelegt ist. Der Strömungsadapter 11 weist dabei zwei Lufteinlässe 12 und einen Luftauslass 13 auf, der mit der jeweiligen Einlassöffnung 8 des jeweiligen Gehäuses 4 fluidisch korrespondiert. Der Strömungsadapter 11 ist dabei einteilig - beispielweise aus Kunststoff - und robust, so dass die durch die jeweiligen Gebläse 5 von außen angesaugte Luft bereits in dem Strömungsadapter 11 verteilt wird. Die von außen angesaugte Luft strömt dann gleichmäßig über die jeweiligen Filterelemente 3 und diese werden geschont. In Fig. 10 bis Fig. 13 ist der Aufbau des Strömungsadapters 11 im Einzelnen gezeigt.

In der Belüftungseinrichtung 1 sind folglich der Strömungsadapter 11, das jeweilige Gehäuse 4 mit dem jeweiligen Filterelement 3 und das jeweilige Gebläse 5 in Strömungsrichtung 10 nacheinander angeschlossen, so dass die Luft durch die Lufteinlässe 12 des Strömungsadapters 11 über den Luftauslass 13 zu der Einlassöffnung 8 des jeweiligen Gehäuses 4 und weiter durch das jeweilige Filterelement 3 strömen kann. Das jeweilige Filterelement 3 weist dabei - wie in Fig. 6 gezeigt ist - eine Rein- und eine Rohseite auf und ist aus einem Filtermaterial geformt. Das Filtermaterial ist hydrophob und das in der angesaugten Luft befindliche Wasser wird in einer Filtrierzone 3a auf der Rohseite abscheiden. Das in dem Filterelement 3 abgeschiedene Wasser setzt sich dann unter der Einwirkung der Schwerkraft in eine Drainagezone 3b des Filterelements 3 ab. Die Drainagezone 3b schließt an die Filtrierzone 3a des Filterelements 3 an und ist quer zur Strömungsrichtung 10 versetzt unterhalb der Filtrierzone 3a des Filterelements 3 angeordnet.

Die Filtrierzone 3a des Filterelements 3 korrespondiert mit einem Filtrierbereich 4a und die Drainagezone 3b mit einem Abtropfbereich 4b des Gehäuses 4. Der Filtrierbereich 4a und der Abtropfbereich 4b des Gehäuses 4 schließen dabei einander an. Ferner weist der Strömungsadapter 11 einen Strömungsbereich 11a und einen Sammelbereich 11b auf, die aneinander anschließen. Der Strömungsbereich 11a des Strömungsadapters 11 korrespondiert dabei fluidisch mit den Einlassöffnungen 8 der jeweiligen Gehäuse 4 und der Sammelbereich 11b ist quer zur Strömungsrichtung 10 versetzt unterhalb des Strömungsbereichs 11a angeordnet. Ferner liegt der Sammelbereich 11b außerhalb einer Hauptluftströmung des Strömungsadapters 11.

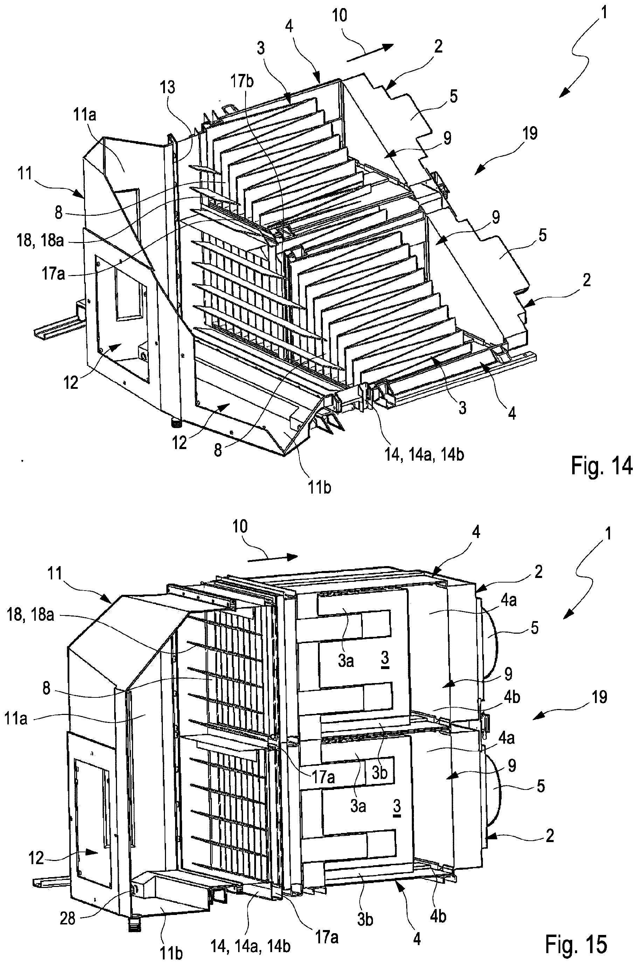

Die Belüftungsmodule 2 sind an den Strömungsadapter 11 durch einen Kopplungsrahmen 14 lösbar festgelegt. Der Kopplungsrahmen 14 weist dazu einen die jeweiligen Belüftungsmodule 2 quer zur Strömungsrichtung 10 einfassenden Modultragrahmen 14a und einen den Strömungsadapter 11 tragenden Adaptertragrahmen 14b auf. Der Modultragrahmen 14a und der Adaptertragrahmen 14b sind durch eine Scharniervorrichtung 15 aneinander klappbar gelagert und durch eine Verschlusseinheit 16 aneinander festlegbar. So kann der Kopplungsrahmen 14 geöffnet und beispielweise das Filterelement 3 in dem jeweiligen Belüftungsmodul 2 vereinfacht ausgewechselt werden. In dem Kopplungsrahmen 14 ist ferner eine Ablaufkanalanordnung 17 zum Ablaufen des in dem jeweiligen Filterelement 3 abgeschiedenen Wassers ausgebildet. Die Ablaufkanalanordnung 17 - wie in Fig. 6 gezeigt - weist dabei zwei übereinander angeordnete horizontale Rinnenkanäle 17a und einen vertikalen Ablaufkanal 17b auf. Der jeweilige Rinnenkanal 17a verbindet dabei jeweils die Abtropfbereiche 4b der in Reihe benachbarten Gehäuse 4 der Belüftungsmodule 2 mit der Ablaufkanalanordnung 17 und der Ablaufkanal 17b verbindet die beiden Rinnenkanäle 17a fluidisch miteinander. Durch die Ablaufkanalanordnung 17 kann das in dem jeweiligen Filterelement 3 abgeschiedene Wasser unter der Einwirkung der Schwerkraft durch die Ablaufkanalanordnung 17 nach außen geleitet werden. Der Aufbau der Ablaufkanalanordnung 17 ist im Einzelnen in Fig. 14 und Fig. 15 gezeigt. Ferner ist an dem Kopplungsrahmen 14 eine Durchlassanordnung 18 - hier eine Jalousienanordnung 18a - für die Einlassöffnung 8 des jeweiligen Gehäuses 4 quer zur Strömungsrichtung 10 festgelegt. Die Durchlassanordnung 18 ist zum Steuern des Luftvolumenstroms durch das jeweilige Belüftungsmodul 2 vorgesehen.

Fig. 7 zeigt eine Seitenansicht eines einzelnen Belüftungsmodus 2 in der Belüftungseinrichtung 1. Das Belüftungsmodul 2 ist ferner in Fig. 8 von oben und in Fig. 9 im Schnitt gezeigt. Um die einzelnen Belüftungsmodule 2 aneinander zu dem Stapelblock 19 lösbar zu stapeln, weist das jeweilige Belüftungsmodul 2 in der Belüftungseinrichtung 1 an seinem Gehäuse 4 eine sich in Strömungsrichtung 10 erstreckende Ausnehmung 20a und eine sich in Strömungsrichtung 10 erstreckende Ausformung 20b auf. Die Ausnehmung 20a und die Ausformung 20b der benachbarten Belüftungsmodule 2 stehen dabei quer zur Strömungsrichtung 10 im Eingriff und bilden eine sogenannte Nut-Feder-Verbindung. Die Ausnehmung 20a und die Ausformung 20b legen auf diese Weise die benachbarten Belüftungsmodule 2 zu dem Stapelblock 19 aneinander lösbar fest. Die Ausnehmung 20a und die Ausformung 20b sind an dem jeweiligen Gehäuse 4 an gegenüberliegenden Gehäuseseiten 21a und 21c ausgebildet, wie auch in Fig. 1 bis Fig. 6 und in Fig. 14 bis Fig. 15 gezeigt ist.

Ferner weist das jeweilige Belüftungsmodul 2 an seinem Gehäuse 4 an den gegenüberliegenden Gehäuseseiten 21b und 21d jeweils zwei sich in Strömungsrichtung 10 erstreckende Kabelteilvertiefungen 22a auf. In dem Stapelblock 19 liegen die jeweiligen Kabelteilvertiefungen 22a an den Gehäusen 4 der benachbarten Belüftungsmodule 2 in Strömungsrichtung 10 aneinander an und bilden eine Kabelöffnung 22. Die Kabelteilvertiefungen 22a sind identisch ausgestaltet, so dass eine Querschnittsfläche der Kabelöffnung 22 einer doppelten Querschnittsfläche der einzelnen Kabelteilvertiefung 22a entspricht. Durch die Kabelöffnung 22 können die Kabelleitungen in Strömungsrichtung 10 zwischen den jeweiligen Belüftungsmodulen 2 geführt werden, so dass ohne einen zusätzlichen Platzbedarf elektrische Bestandteile der Belüftungseinrichtung 1 in Strömungsrichtung 10 vor und nach dem jeweiligen Belüftungsmodul 2 miteinander verbunden werden können. Die Kabelöffnungen 22 aus den aneinander anliegenden Kabelteilvertiefungen 22a sind auch in Fig. 1 bis Fig. 6 und Fig. 14 bis Fig. 15 gezeigt.

Um das Filterelement 3 quer zur Strömungsrichtung 10 in dem Gehäuse 4 luftdicht festzulegen, weist das Filterelement 3 in dem jeweiligen Belüftungsmodul 2 einen umlaufenden Dichtrand 23 auf. Der Dichtrand 23 liegt dabei einseitig an einer die Einlassöffnung 8 einfassenden Dichtfläche 24 des Gehäuses 4 und andersseitig an dem Kopplungsrahmen 14 an. Der Dichtrand 23 ist an dem Filterelement 3 ausgebildet, so dass beim Einsetzen oder beim Auswechseln des jeweiligen Filterelements 3 in der Belüftungseinrichtung 1 auch der Dichtrand 23 eingesetzt oder ausgewechselt wird. Die Dichtfläche 24 ist dabei durch einen die Einlassöffnung 8 einfassenden Gehäuserahmen 25 gebildet. Zum Abdichten ist an einer dem Gehäuse 4 und dem Kopplungsrahmen 14 zugewandten Seitenflächen 23a und 23b des Dichtrands 23 jeweils eine elastische Dichtung 26a und 26b festgelegt - beispielweise angeklebt.

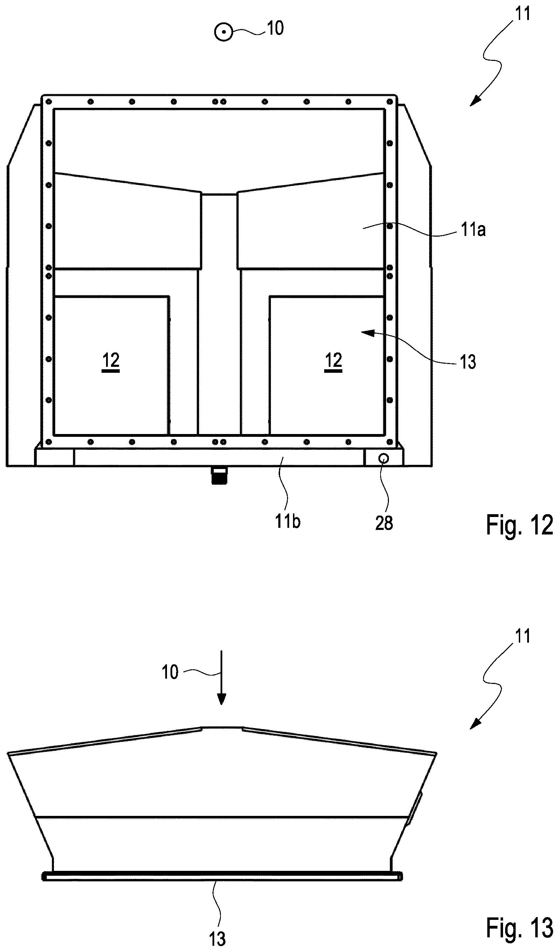

Fig. 10 zeigt eine Ansicht des Strömungsadapters 11. Ferner ist der Strömungsadapter 11 in Fig. 11 teilweise im Schnitt; in Fig. 12 von hinten und in Fig. 13 von oben gezeigt. Der Strömungsadapter 11 weist die Lufteinlässe 12 und den Luftauslass 13 auf, der mit der jeweiligen Einlassöffnung 8 des jeweiligen Gehäuses 4 fluidisch korrespondiert. Der Strömungsadapter 11 ist einteilig und bevorzugt aus Kunststoff geformt. Dadurch ist der Strömungsadapter 11 robust und die durch die jeweiligen Gebläse 5 von außen angesaugte Luft wird bereits in dem Strömungsadapter 11 verteilt und strömt gleichmäßig über die jeweiligen Filterelemente 3. Der Strömungsadapter 11 weist dabei den Strömungsbereich 11a und den Sammelbereich 11b auf, die aneinander anschließen. Der Strömungsbereich 11a des Strömungsadapters 11 korrespondiert dabei fluidisch mit den Einlassöffnungen 8 der jeweiligen Gehäuse 4 und der Sammelbereich 11b ist quer zur Strömungsrichtung 10 versetzt unterhalb des Strömungsbereichs 11a angeordnet. Ferner liegt der Sammelbereich 11b außerhalb einer Hauptluftströmung in dem Strömungsadapter 11.

Wie in Fig. 1 bis Fig. 6 bereits erläutert, ist die Ablaufkanalanordnung 17 in dem Kopplungsrahmen 14 ausgebildet. Diese verbindet fluidisch den Sammelbereich 11b des Strömungsadapters 11 und die Abtropfbereiche 4b der jeweiligen Gehäuse 4 fluidisch miteinander. Durch die Ablaufkanalanordnung 17 kann das in dem Filterelement 3 abgeschiedene Wasser aus dem jeweiligen Gehäuse 4 in den Sammelbereich 17 des Strömungsadapters 11 entgegen Strömungsrichtung 10 geführt werden. Dazu ist der Sammelbereich 11b des Strömungsadapters 11 mit der Ablaufkanalanordnung 17 über eine Ablauföffnung 28 fluidisch verbunden, wobei die Ablaufkanalanordnung 17 an ihrer tiefsten Stelle in dem unteren Rinnenkanal 17a über eine Ablaufleitung - hier nicht gezeigt - mit der Ablauföffnung 28 verbunden ist. Durch die Ablauföffnung 28 wird das in den Filterelementen 3 abgeschiedene Wasser in den Strömungsadapter 11 geleitet und in dem Sammelbereich 11b des Strömungsadapters 11 entgegen der Strömungsrichtung 10 nach außen geführt. Der Aufbau der Ablaufkanalanordnung 17 ist im Einzelnen in Fig. 6, Fig. 14 und Fig. 15 gezeigt.

Fig. 14 und Fig. 15 zeigen Schnittansichten der Belüftungseinrichtung 1. In der Belüftungseinrichtung 1 sind an dem Kopplungsrahmen 14 einseitig die einzelnen Belüftungsmodule 2 zu dem Stapelblock 19 und andersseitig der Strömungsadapter 11 festgelegt. In dem Kopplungsrahmen 14 ist die Ablaufkanalanordnung 17 ausgebildet, die zwei übereinander angeordnete horizontale Rinnenkanäle 17a und einen vertikalen Ablaufkanal 17b aufweist. Der jeweilige Rinnenkanal 17a ist in der eingebauten Belüftungseinrichtung horizontal mit einer Abweichung bis zu 10° zum Boden ausgerichtet, um das in dem Filterelement 3 abgeschiedene Wasser horizontal in der Ablaufkanalanordnung 17 unter der Einwirkung der Schwerkraft leiten zu können. Der jeweilige Rinnenkanal 17a verbindet dabei jeweils die Abtropfbereiche 4b der in Reihe benachbarten Gehäuse 4 der Belüftungsmodule 2 in dem Stapelblock 19. Die beiden Rinnenkanäle 17a sind über den Ablaufkanal 17b vertikal fluidisch verbunden. Der vertikale Ablaufkanal 17b ist in der eingebauten Belüftungseinrichtung 1 vertikal mit einer Abweichung bis zu 10° zum Boden ausgerichtet, so dass das in dem Filterelement 3 abgeschiedene Wasser unter der Einwirkung der Schwerkraft aus dem oberen Rinnenkanal 17a zu dem unteren Rinnenkanal 17a geleitet werden kann. Das in den Filterelementen 3 abgeschiedene Wasser wird anschließend aus der Ablaufkanalanordnung 17 in den Sammelbereich 11b des Strömungsadapters 11 und weiter nach außen geleitet. Dazu ist der untere Rinnenkanal 17a an seiner tiefsten Stelle durch die Ablauföffnung 28 mit dem Sammelbereich 11b des Strömungsadapters fluidisch verbunden. Auf diese vorteilhafte Weise sind die mehreren Gehäuse 4 und die mehreren Filterelemente 3 über die Ablaufkanalanordnung 17 in dem Kopplungsrahmen 14 miteinander fluidisch verbunden und das in den mehreren Filterelementen 3 abgeschiedene Wasser kann vereinfacht aus der Belüftungseinrichtung 1 abgeleitet werden.

Zusammenfassend ist die erfindungsgemäße Belüftungseinrichtung 1 modular aufbaubar und die identisch ausgestalteten Belüftungsmodule 2 können auf einfache Weise gegeneinander ausgetauscht werden; ferner kann das in dem jeweiligen Filterelement 3 abgeschiedene Wasser vereinfacht aus der Belüftungseinrichtung 1 abgeleitet werden; ein Abdichten der Belüftungseinrichtung 1 kann vereinfacht und die Belüftungseinrichtung 1 kann genauer angesteuert und die Luftströmung in dem jeweiligen Filterelement 3 besser verteilt werden.

## Patentansprüche

1. Belüftungseinrichtung (1) zum Filtern von Luft und zum Abscheiden von Wasseraerosolen aus Luft,
- wobei die Belüftungseinrichtung (1) mehrere Filterelemente (3), mehrere Gehäuse (4), mehrere Gebläse (5) und wenigstens einen Strömungsadapter (11) aufweist,
- wobei das wenigstens eine Filterelement (3) in dem wenigstens einen Gehäuse (4) von einer Einlassöffnung (8) zu einer Auslassöffnung (9) des wenigstens einen Gehäuses (4) in eine Strömungsrichtung (10) luftdurchströmbar festgelegt ist, und
- wobei das wenigstens eine Gebläse (5) an der Auslassöffnung (9) in Strömungsrichtung (10) hinter dem wenigstens einen Gehäuse (4) und der wenigstens eine Strömungsadapter (11) an der Einlassöffnung (8) in Strömungsrichtung (10) vor dem wenigstens einen Gehäuse (4) festgelegt sind,
- wobei das jeweilige Filterelement (3), das jeweilige Gehäuse (4) und das jeweilige Gebläse (5) jeweils ein Belüftungsmodul (2) mit einer Strömungsfläche (7) bilden, und
- wobei mehrere identische Belüftungsmodule (2) zu der Belüftungseinrichtung (1) aneinander derart lösbar gestapelt sind, dass eine Gesamtströmungsfläche (6) der Belüftungseinrichtung (1) einem Vielfachen der Strömungsfläche (7) des einzelnen Belüftungsmoduls (2) entspricht,
**dadurch gekennzeichnet,**
- **dass** ein Kopplungsrahmen (14) einen die jeweiligen Belüftungsmodule (2) quer zur Strömungsrichtung (10) einfassenden Modultragrahmen (14a) und einen den wenigstens einen Strömungsadapter (11) tragenden Adaptertragrahmen (14b) aufweist, die durch eine Scharniervorrichtung (15) aneinander klappbar oder verschiebbar gelagert und durch eine Verschlusseinheit (16) aneinander festlegbar sind.

2. Belüftungseinrichtung nach Anspruch 1,
**dadurch gekennzeichnet,**
**dass** wenigstens zwei der in der Belüftungseinrichtung (1) benachbarten Belüftungsmodule (2) an seinen Gehäusen (4) jeweils eine sich in Strömungsrichtung (10) erstreckende Kabelteilvertiefung (22a) aufweisen, wobei die jeweiligen Kabelteilvertiefungen (22a) an den Gehäusen (4) der benachbarten Belüftungsmodule (2) in Strömungsrichtung (10) aneinander anliegen und eine Kabelvertiefung (22) bilden.

3. Belüftungseinrichtung nach Anspruch 1 oder 2,
**dadurch gekennzeichnet,**
**dass** eins der in der Belüftungseinrichtung (1) benachbarten Belüftungsmodule (2) an seinem Gehäuse (4) eine sich in Strömungsrichtung (10) erstreckende Ausnehmung (20a) und ein anderes der in der Belüftungseinrichtung (1) benachbarten Belüftungsmodule (2) an seinem Gehäuse (4) eine sich in Strömungsrichtung (10) erstreckende Ausformung (20b) aufweisen, wobei die jeweilige Ausnehmung (20a) und die jeweilige Ausformung (20b) quer zur Strömungsrichtung (10) im Eingriff stehen und die benachbarten Belüftungsmodule (2) aneinander lösbar festlegen.

4. Belüftungseinrichtung nach einem der vorangehenden Ansprüche,
**dadurch gekennzeichnet,**
**dass** die Belüftungseinrichtung (1) vier Belüftungsmodule (2) und einen einzigen Strömungsadapter (11) aufweist, wobei die Belüftungsmodule (2) zu einem 2x2 Stapelblock (19) aneinander lösbar festgelegt sind und mittels eines Kopplungsrahmens (14) an dem Strömungsadapter (11) luftleitend festgelegt sind.

5. Belüftungseinrichtung nach einem der Ansprüche 1 bis 4,
**dadurch gekennzeichnet,**
**dass** eine Ablaufkanalanordnung (17) in dem Adaptertragrahmen (14b) ausgebildet ist.

6. Belüftungseinrichtung nach einem der vorangehenden Ansprüche,
**dadurch gekennzeichnet,**
**dass** an einem Kopplungsrahmen (14) für die Einlassöffnung (8) des jeweiligen Gehäuses (4) jeweils eine Durchlassanordnung (18), bevorzugt eine Jalousienanordnung (18a), zum Steuern des Luftvolumenstroms durch das jeweilige Belüftungsmodul (2) quer zur Strömungsrichtung (10) festgelegt ist.

7. Belüftungseinrichtung nach einem der vorangehenden Ansprüche,
**dadurch gekennzeichnet,**
**dass** das jeweilige Filterelement (3) einen umlaufenden Dichtrand (23) aufweist, wobei der Dichtrand (23) einseitig an einer die Einlassöffnung (8) einfassenden Dichtfläche (24) des Gehäuses (4) und andersseitig an dem Kopplungsrahmen (14) anliegt und das jeweilige Gehäuse (4) um die Einlassöffnung (8) zu einem Kopplungsrahmen (14) quer zur Strömungsrichtung (10) abdichtet.

8. Belüftungseinrichtung nach Anspruch 7,
**dadurch gekennzeichnet,**
**dass** an einer dem jeweiligen Gehäuse (4) und/oder dem Kopplungsrahmen (14) zugewandten Seitenfläche (23a, 23b) des Dichtrands (23) eine elastische Dichtung (26a, 26b) festgelegt ist.

9. Belüftungseinrichtung nach einem der vorangehenden Ansprüche,
**dadurch gekennzeichnet,**
**dass** der wenigstens eine Strömungsadapter (11) einteilig und bevorzugt aus Kunststoff ist.

10. Belüftungseinrichtung nach einem der vorangehenden Ansprüche,
**dadurch gekennzeichnet,**
**dass** der wenigstens eine Strömungsadapter (11) einen Sammelbereich (11b) und einen Strömungsbereich (11a) aufweist, wobei der Strömungsbereich (11a) des wenigstens einen Strömungsadapters (11) mit der Einlassöffnung (8) des wenigstens einen Gehäuses (4) luftleitend korrespondiert und der Sammelbereich (11b) zur Strömungsrichtung (10) versetzt unterhalb des Strömungsbereichs (11a) und außerhalb einer Hauptluftströmung des wenigstens einen Strömungsadapters (11) angeordnet ist.

11. Belüftungseinrichtung nach Anspruch 10,
**dadurch gekennzeichnet,**
**dass** eine Ablaufkanalanordnung (17) den Sammelbereich (11b) des wenigstens einen Strömungsadapters (11) und einen Abtropfbereich (4b) des wenigstens einen Gehäuses (4) fluidisch miteinander verbindet, der mit einer Drainagezone (3b) des Filterelements (3) zum Abführen des in dem wenigstens einen Filterelement (3) abgeschiedenen Wassers fluidisch korrespondiert.

12. Belüftungseinrichtung nach Anspruch 11,
**dadurch gekennzeichnet,**
**dass** der wenigstens eine Strömungsadapter (11) eine aus dem Sammelbereich (11b) nach außen führende Adapterauslassöffnung aufweist, die fluidleitend mit der Ablaufkanalanordnung (11) verbunden ist.

13. Belüftungseinrichtung nach Anspruch 11 oder 12,
**dadurch gekennzeichnet,**
**dass** die Ablaufkanalanordnung (17) in einem Kopplungsrahmen (14) ausgebildet ist, der zwischen dem wenigstens einen Gehäuse (4) und dem wenigstens einen Strömungsadapter (11) quer zur Strömungsrichtung (10) luftdicht festgelegt ist.

14. Belüftungseinrichtung nach Anspruch 13,
**dadurch gekennzeichnet,**
**dass** die Ablaufkanalanordnung (17) wenigstens einen horizontalen Rinnenkanal (17a), bevorzugt aus einem u-förmigen metallischen Profil, aufweist, der mit einem Abtropfbereich (4b) des wenigstens einen Gehäuses (4) fluidisch verbunden ist.

15. Belüftungseinrichtung nach Anspruch 14,
**dadurch gekennzeichnet,**
**dass** die Ablaufkanalanordnung (17) wenigstens zwei übereinander angeordnete Rinnenkanäle (17a) aufweist, die durch wenigstens einen vertikalen Ablaufkanal (17b), bevorzugt aus einem u-förmigen oder I-förmigen metallischen Profil, fluidisch miteinander verbunden sind.

16. Belüftungseinrichtung nach einem der vorangehenden Ansprüche,
**dadurch gekennzeichnet,**
- **dass** das jeweilige Gebläse (5) durch eine Steuerungsvorrichtung (27) gesteuert ist, die wenigstens eine Messanordnung zum Erfassen des Luftvolumenstroms durch das jeweilige Filterelement (3) aufweist, und
- **dass** die wenigstens eine Messanordnung eine Druckmesseinheit zum Erfassen eines statischen Drucks aufweist, die innerhalb der Belüftungseinrichtung (1) angeordnet ist.

17. Belüftungseinrichtung nach Anspruch 16,
**dadurch gekennzeichnet,**
**dass** die jeweilige Druckmesseinheit mit einer Druckmessstelle fluidisch verbunden ist oder eine solche Druckmessstelle aufweist, wobei die Druckmessstelle innerhalb des wenigstens einen Gehäuses (4) im Bereich der Einlassöffnung (8) angeordnet ist und dort eine Messöffnung aufweist.

18. Belüftungseinrichtung nach Anspruch 17,
**dadurch gekennzeichnet,**
**dass** die jeweilige Druckmessstelle oder deren Messöffnung in einem Abtropfbereich (4b) des Gehäuses (4) angeordnet ist.

19. Belüftungseinrichtung nach Anspruch 17 oder 18,
**dadurch gekennzeichnet,**
- **dass** das Gehäuse (4) einen die Einlassöffnung (8) einfassenden Gehäuserahmen (25) aufweist, der eine radial nach innen vorstehende Einlassstufe bildet, und
- **dass** die Druckmessstelle an der Einlassstufe angeordnet ist, wobei die Messöffnung in Strömungsrichtung (10) offen ist und im Wesentlichen parallel zur Strömungsrichtung (10) ausgerichtet ist.

## Claims

1. Ventilation apparatus (1) for filtering air and separating water aerosols from air,
- wherein the ventilation apparatus (1) has a plurality of filter elements (3), a plurality of housings (4), a plurality of fans (5) and at least one flow adapter (11),
- wherein the at least one filter element (3) is fixed in the at least one housing (4) so that air can flow through it from an inlet opening (8) to an outlet opening (9) of the at least one housing (4) in a flow direction (10), and
- wherein the at least one fan (5) is fixed to the outlet opening (9) downstream of the at least one housing (4) in the flow direction (10) and the at least one flow adapter (11) is fixed to the inlet opening (8) upstream of the at least one housing (4) in the flow direction (10),
- wherein the respective filter element (3), the respective housing (4) and the respective fan (5) each form a ventilation module (2) with a flow area (7), and
- wherein a plurality of identical ventilation modules (2) are detachably stacked against one another to form the ventilation apparatus (1) in such a way that a total flow area (6) of the ventilation apparatus (1) corresponds to a multiple of the flow area (7) of the individual ventilation module (2),
**characterised in that**
- a coupling frame (14) has a module support frame (14a) enclosing the respective ventilation modules (2) transversely to the flow direction (10), and an adapter support frame (14b) supporting the at least one flow adapter (11), which are mounted so as to be foldable against one another or displaceable by means of a hinge device (15) and can be fixed against one another by means of a closure unit (16).

2. Ventilation apparatus according to claim 1,
**characterised in that**
at least two of the adjacent ventilation modules (2) in the ventilation apparatus (1) each have on its housings (4) a cable part indentation (22a) extending in the flow direction (10), wherein the respective cable part indentations (22a) on the housings (4) of the adjacent ventilation modules (2) bear against one another in the flow direction (10) and form a cable indentation (22).

3. Ventilation apparatus according to claim 1 or 2,
**characterised in that**
one of the adjacent ventilation modules (2) in the ventilation apparatus (1) has on its housing (4) a recess (20a) extending in the flow direction (10) and another of the adjacent ventilation modules (2) in the ventilation apparatus (1) has on its housing (4) a formation (20b) extending in the flow direction (10), wherein the respective recess (20a) and the respective formation (20b) are in engagement transversely to the flow direction (10) and fix the adjacent ventilation modules (2) detachably to one another.

4. Ventilation apparatus according to any of the preceding claims,
**characterised in that**
the ventilation apparatus (1) has four ventilation modules (2) and a single flow adapter (11), wherein the ventilation modules (2) are detachably fixed to one another to form a 2x2 stacking block (19) and are fixed in an air-conducting manner to the flow adapter (11) by means of a coupling frame (14).

5. Ventilation apparatus according to any of claims 1 to 4,
**characterised in that**
a drain channel arrangement (17) is formed in the adapter support frame (14b).

6. Ventilation apparatus according to any of the preceding claims,
**characterised in that**
a passage arrangement (18), preferably a louvre arrangement (18a), for controlling the air flow rate through the respective ventilation module (2) transversely to the flow direction (10) is in each case fixed to a coupling frame (14) for the inlet opening (8) of the respective housing (4).

7. Ventilation apparatus according to any of the preceding claims,
**characterised in that**
the respective filter element (3) has a circumferential sealing rim (23), wherein the sealing rim (23) bears on one side against a sealing surface (24) of the housing (4) enclosing the inlet opening (8) and on the other side against the coupling frame (14) and seals the respective housing (4) around the inlet opening (8) to a coupling frame (14) transversely to the flow direction (10).

8. Ventilation apparatus according to claim 7,
**characterised in that**
an elastic seal (26a, 26b) is fixed to a side surface (23a, 23b) of the sealing rim (23) facing the respective housing (4) and/or the coupling frame (14).

9. Ventilation apparatus according to any of the preceding claims,
**characterised in that**
the at least one flow adapter (11) is in one piece and preferably made of plastic.

10. Ventilation apparatus according to any of the preceding claims,
**characterised in that**
the at least one flow adapter (11) has a collecting region (11b) and a flow region (11a), wherein the flow region (11a) of the at least one flow adapter (11) corresponds in an air-conducting manner to the inlet opening (8) of the at least one housing (4) and the collecting region (11b) is arranged offset with respect to the flow direction (10) below the flow region (11a) and outside a main air flow of the at least one flow adapter (11).

11. Ventilation apparatus according to claim 10,
**characterised in that**
a drain channel arrangement (17) fluidically connects the collecting region (11b) of the at least one flow adapter (11) and a drip region (4b) of the at least one housing (4), which drip region fluidically corresponds to a drainage zone (3b) of the filter element (3) for discharging the water separated in the at least one filter element (3).

12. Ventilation apparatus according to claim 11,
**characterised in that**
the at least one flow adapter (11) has an adapter outlet opening which leads out of the collecting region (11b) and is connected in a fluid-conducting manner to the drain channel arrangement (11).

13. Ventilation apparatus according to claim 11 or 12,
**characterised in that**
the drain channel arrangement (17) is formed in a coupling frame (14) which is fixed in an airtight manner between the at least one housing (4) and the at least one flow adapter (11) transversely to the flow direction (10).

14. Ventilation apparatus according to claim 13,
**characterised in that**
the drain channel arrangement (17) has at least one horizontal gutter channel (17a), preferably made of a U-shaped metallic profile, which is fluidically connected to a drip region (4b) of the at least one housing (4).

15. Ventilation apparatus according to claim 14,
**characterised in that**
the drain channel arrangement (17) has at least two gutter channels (17a) which are arranged one above the other and are fluidically connected to one another by at least one vertical drain channel (17b) preferably made of a U-shaped or L-shaped metallic profile.

16. Ventilation apparatus according to any of the preceding claims,
**characterised in that**
- the respective fan (5) is controlled by a control device (27) having at least one measurement arrangement for detecting the air flow rate through the respective filter element (3), and
- the at least one measurement arrangement has a pressure measurement unit for detecting a static pressure, which pressure measurement unit is arranged inside the ventilation apparatus (1).

17. Ventilation apparatus according to claim 16,
**characterised in that**
the respective pressure measurement unit is fluidically connected to a pressure measurement point or has such a pressure measurement point, wherein the pressure measurement point is arranged inside the at least one housing (4) in the region of the inlet opening (8) and has a measurement opening there.

18. Ventilation apparatus according to claim 17,
**characterised in that**
the respective pressure measurement point or its measurement opening is arranged in a drip region (4b) of the housing (4).

19. Ventilation apparatus according to claim 17 or 18,
**characterised in that**
- the housing (4) has a housing frame (25) which encloses the inlet opening (8) and forms a radially inwardly projecting inlet step, and
- the pressure measurement point is arranged on the inlet step, wherein the measurement opening is open in the flow direction (10) and is oriented substantially parallel to the flow direction (10).

## Revendications

1. Appareil de ventilation (1) destiné au filtrage de l'air et à la séparation des aérosols hydriques contenus dans l'air,
- dans lequel l'appareil de ventilation (1) présente plusieurs éléments filtrants (3), plusieurs boîtiers (4), plusieurs ventilateurs (5) et au moins un adaptateur d'écoulement (11),
- dans lequel le au moins un élément filtrant (3) est fixé au sein du au moins un boîtier (4) de manière à pouvoir être traversé par de l'air dans une direction d'écoulement (10) depuis un orifice d'entrée (8) vers un orifice de sortie (9) du au moins un boîtier (4), et
- dans lequel le au moins un ventilateur (5) est fixé au niveau de l'orifice de sortie (9) en aval du au moins un boîtier (4) dans la direction d'écoulement (10) et le au moins un adaptateur d'écoulement (11) est fixé au niveau de l'orifice d'entrée (8) en amont du au moins un boîtier (4) dans la direction d'écoulement (10),
- dans lequel l'élément filtrant (3) respectif, le boîtier (4) respectif et le ventilateur (5) respectif forment respectivement un module de ventilation (2) avec une surface d'écoulement (7), et
- dans lequel plusieurs modules de ventilation (2) identiques sont empilés les uns sur les autres de manière amovible afin de constituer l'appareil de ventilation (1), de telle manière qu'une surface d'écoulement totale (6) de l'appareil de ventilation (1) correspond à un multiple de la surface d'écoulement (7) du module de ventilation (2) individuel, **caractérisé en ce que**
- un cadre de couplage (14) présente un cadre de support de module (14a) entourant les modules de ventilation (2) respectifs transversalement à la direction d'écoulement (10) et un cadre de support d'adaptateur (14b) supportant le au moins un adaptateur d'écoulement (11), qui peuvent être repliés ou déplacés les uns au niveau des autres grâce à un dispositif formant charnière (15) et qui peuvent être fixés les uns au niveau des autres grâce à une unité de fermeture (16).

2. Appareil de ventilation selon la revendication 1,
**caractérisé en ce qu'**
au moins deux des modules de ventilation (2) adjacents au sein de l'appareil de ventilation (1) présentent au niveau de leurs boîtiers (4) respectivement un évidement pour partie de câble (22a) s'étendant dans le sens d'écoulement (10), dans lequel les évidements pour partie de câble (22a) respectifs présents au niveau des boîtiers (4) des modules de ventilation (2) adjacents sont contigus les uns aux autres dans le sens d'écoulement (10) et forment un évidement pour câble (22).

3. Appareil de ventilation selon la revendication 1 ou 2,
**caractérisé en ce qu'**
un des modules de ventilation (2) adjacents au sein de l'appareil de ventilation (1) présente au niveau de son boîtier (4) une cavité (20a) s'étendant dans le sens d'écoulement (10) et un autre des modules de ventilation (2) adjacents au sein de l'appareil de ventilation (1) présente au niveau de son boîtier (4) un renfoncement (20b) s'étendant dans le sens d'écoulement (10), dans lequel la cavité (20a) respective et le renfoncement (20b) respectif sont en prise transversalement au sens d'écoulement (10) et fixent les modules de ventilation (2)adjacents de manière amovible les uns au niveau des autres.

4. Appareil de ventilation selon l'une quelconque des revendications précédentes,
**caractérisé en ce que**
l'appareil de ventilation (1) présente quatre modules de ventilation (2) et un adaptateur d'écoulement (11) unique, dans lequel les modules de ventilation (2) sont fixés de manière amovible les uns au niveau des autres afin de constituer un bloc d'empilement 2x2 (19) et sont fixés à l'adaptateur d'écoulement (11) au moyen d'un cadre de couplage (14) de manière à conduire l'air.

5. Appareil de ventilation selon l'une quelconque des revendications 1 à 4,
**caractérisé en ce qu'**
un agencement de canal d'évacuation (17) est réalisé au sein du cadre de support d'adaptateur (14b).

6. Appareil de ventilation selon l'une quelconque des revendications précédentes,
**caractérisé en ce qu'**
un agencement perméable (18), de préférence un agencement à persiennes (18a), est respectivement fixé au niveau d'un cadre de couplage (14) destiné à l'orifice d'entrée (8) du boîtier (4) respectif afin de commander le débit volumique d'air à travers le module de ventilation (2) respectif transversalement à la direction d'écoulement (10).

7. Appareil de ventilation selon l'une quelconque des revendications précédentes,
**caractérisé en ce que**
l'élément filtrant (3) respectif présente un bord d'étanchéité (23) périphérique, dans lequel le bord d'étanchéité (23) repose d'un côté sur une surface d'étanchéité (24) du boîtier (4) entourant l'orifice d'entrée (8) et de l'autre côté sur le cadre de couplage (14) et assure l'étanchéité du boîtier (4) respectif autour de l'orifice d'entrée (8) par rapport à un cadre de couplage (14) transversalement au sens d'écoulement (10).

8. Appareil de ventilation selon la revendication 7,
**caractérisé en ce qu'**
un joint élastique (26a, 26b) est fixé au niveau d'une surface latérale (23a, 23b), tournée vers le boîtier (4) respectif et/ou le cadre de couplage (14), du bord d'étanchéité (23).

9. Appareil de ventilation selon l'une quelconque des revendications précédentes,
**caractérisé en ce que**
le au moins un adaptateur d'écoulement (11) est d'un seul tenant et de préférence en matière plastique.

10. Appareil de ventilation selon l'une quelconque des revendications précédentes,
**caractérisé en ce que**
le au moins un adaptateur d'écoulement (11) présente une région de collecte (11b) et une région d'écoulement (11a), dans lequel la région d'écoulement (11a) du au moins un adaptateur d'écoulement (11) correspond avec l'orifice d'entrée (8) du au moins un boîtier (4) de manière à conduire l'air, et la région de collecte (11b) est agencée de manière décalée par rapport au sens d'écoulement (10) en dessous de la région d'écoulement (11a) et à l'extérieur d'un écoulement d'air principal du au moins un adaptateur d'écoulement (11).

11. Dispositif de ventilation selon la revendication 10,
**caractérisé en ce qu'**
un agencement de canal d'évacuation (17) relie fluidiquement l'une à l'autre la région de collecte (11b) du au moins un adaptateur d'écoulement (11) et une région d'égouttement (4b) du au moins un boîtier (4) correspondant fluidiquement avec une zone de drainage (3b) de l'élément filtrant (3) afin d'éliminer l'eau séparée au sein du au moins un élément filtrant (3).

12. Dispositif de ventilation selon la revendication 11,
**caractérisé en ce que**
le au moins un adaptateur d'écoulement (11) présente un orifice de sortie d'adaptateur menant vers l'extérieur à partir de la région de collecte (11b) et relié de manière fluidique à l'agencement de canal d'évacuation (11).

13. Appareil de ventilation selon la revendication 11 ou 12,
**caractérisé en ce que**
l'agencement de canal d'évacuation (17) est réalisé au sein d'un cadre de couplage (14) qui est fixé entre le au moins un boîtier (4) et le au moins un adaptateur d'écoulement (11) de manière étanche à l'air transversalement à la direction d'écoulement (10).

14. Appareil de ventilation selon la revendication 13,
**caractérisé en ce que**
l'agencement de canal d'évacuation (17) présente au moins une rigole horizontale (17a), de préférence constituée d'un profilé métallique en forme de U, qui est reliée fluidiquement à une région d'égouttement (4b) du au moins un boîtier (4).

15. Appareil de ventilation selon la revendication 14,
**caractérisé en ce que**
l'agencement de canal d'évacuation (17) présente au moins deux rigoles (17a) agencées l'une au-dessus de l'autre et reliées fluidiquement l'une à l'autre grâce à au moins un canal d'évacuation (17b) vertical, de préférence constitué d'un profilé métallique en forme de U ou de I.

16. Appareil de ventilation selon l'une quelconque des revendications précédentes,
**caractérisé en ce que**
- le ventilateur (5) respectif est commandé par un dispositif de commande (27) qui présente au moins un dispositif de mesure permettant de détecter le débit volumique d'air à travers l'élément filtrant (3) respectif, et
- le au moins un dispositif de mesure présente une unité de mesure de pression permettant de détecter une pression statique et agencée à l'intérieur de l'appareil de ventilation (1).

17. Appareil de ventilation selon la revendication 16,
**caractérisé en ce que**
l'unité de mesure de pression respective est reliée fluidiquement à un point de mesure de pression ou présente un tel point de mesure de pression, dans lequel le point de mesure de pression est agencé à l'intérieur du au moins un boîtier (4) dans la région de l'orifice d'entrée (8) et présente à cet endroit un orifice de mesure.

18. Appareil de ventilation selon la revendication 17,
**caractérisé en ce que**
le point de mesure de pression respectif ou son orifice de mesure est agencé dans une région d'égouttement (4b) du boîtier (4).

19. Appareil de ventilation selon la revendication 17 ou 18,
**caractérisé en ce que**
- le boîtier (4) présente un cadre de boîtier (25) entourant l'orifice d'entrée (8) et formant un étage d'entrée faisant saillie radialement vers l'intérieur, et
- le point de mesure de pression est agencé au niveau de l'étage d'entrée, dans lequel l'orifice de mesure est ouvert dans le sens d'écoulement (10) et est orienté de manière essentiellement parallèle au sens d'écoulement (10).
